# DEMANDE DE BREVET EUROPEEN

(11) **EP 1 415 632 A1**
(43) Date de publication de la demande: **06.05.2004**
(21) Numéro de dépôt: 03356169.7
(22) Date de dépôt: 30.10.2003
(51) Int. Cl.: A61G 21/00, B60N 2/015

(54) **Procédé d'aménagement à l'intérieur d'un véhicule funéraire**

(30) Priorité: 31.10.2002 FR 0213896
(71) Demandeur: Ducarme SA, 42350 La Talaudière (FR)
(72) Inventeur: Angin, Alain, 42290 Sorbiers (FR)
(74) Mandataire: Dupuis, François

(57) **Abrégé**

Le procédé d'aménagement d'un véhicule utilitaire et funéraire est remarquable en ce qu'il comprend des sièges homologués, et en ce qu'il consiste à identifier des véhicules « combi » agencés pour recevoir en plus des sièges et/ou banquettes avant correspondant au chauffeur et à son ou ses passagers adjacents, à rechercher les véhicules pouvant inclure une ou deux lignes de sièges arrières pré-ancrés sur le plancher à l'intérieur du véhicule, à modifier par une analyse combinatoire la position desdits sièges avec suppression de certains d'entre eux pour permettre et autoriser la fixation d'un ou de plusieurs sièges homologués dans des positions nouvelles à l'intérieur du véhicule utilitaire et autoriser ensuite l'insertion d'équipement et moyens nécessaires au véhicule funéraire du type logement-cerceuil, ou caisson réfrigérés et autres, lesdits sièges arrières étant homologués M1.

## Description

L'invention se rattache au secteur technique des véhicules funéraires.

De récentes normes européennes, selon la directive 70/156 CEE du 05/12/1996, modifiée le 12/10/1997, et des directives françaises, apportent les précision suivantes :
La Directive CEE dit que les places arrières ajoutées dans les véhicules utilitaires doivent répondre aux normes de sécurité européenne sauf les places arrières funéraires considérées comme places de convoi. Cette directive est applicable depuis le 1^{er} Janvier 2000.
La réglementation du Code de la Route en France dit qu'une place de convoi, c'est-à-dire utilisée à vitesse réduite du véhicule est uniquement valable en ville.
Par ailleurs, la responsabilité des produits défectueux s'applique à tous les fabricants de sorte que les carrossiers de funéraire ont une obligation d'information notamment sur les conditions d'utilisation des places arrières.
Or, les véhicules funéraires sont utilisés autrement que pour la ville et le convoi, et dans ce cas ils ne répondent pas aux critères précités, et il y a responsabilité.
Les places de convoi ne sont pas présentes sur la carte grise des véhicules. Cette réglementation à terme va être supprimée. C'est donc pour anticiper sur l'évolution de cette réglementation et pour répondre à la question des utilisations qui sont non conformes que le demandeur s'est intéressé à la présente invention.

L'anticipation de ces normes requiert une reconsidération totale de l'aménagement des sièges de véhicules et des véhicules eux-mêmes devant répondre à des futurs critères d'homologation et donc de sécurité par rapport aux véhicules proprement dits.

Les entreprises funéraires qui devront répondre à ces normes sont de plus en plus amenées à assurer des déplacements extra muros des villes, villages, ou communautés de communes, c'est-à-dire à parcourir un certain nombre de kilomètres sur des routes nationales, départementales ou autres, d'un point géographique à un autre.

Dans cette situation particulière, le transport des personnes accompagnantes et/ou de service devra s'effectuer en répondant à des normes d'homologation très précises, notamment sur les sièges arrières mentionnés sur la carte grise, c'est-à-dire homologués M1.

A ce jour, et à la connaissance du Demandeur, qui a une large expérience dans ce domaine, les véhicules transformés conformes à la réglementation sont équipés de sièges arrières qui ne répondent pas aux critères d'homologation M1. En d'autres termes, à partir de la date d'application des directives européennes et nationales, toutes les entreprises funéraires seront en violation des critères de sécurité applicables, de sorte qu'en cas d'accident corporel ou autre, entraînant des incapacités ou autres du personnel accompagnant de service ou des accompagnants, lesdites entreprises auront une responsabilité civile et pénale importante, dans le cas où les sièges non homologués seront utilisés pour les transports hors ville, ce qui est le cas actuellement.

Un autre problème posé réside dans le fait que les véhicules utilitaires utilisés comme véhicules funéraires font à l'origine l'objet d'homologation, notamment du Service des Mines. La transformation et les modifications apportées audit véhicule, dans sa conception et agencement, requièrent une nouvelle homologation habituelle pour tous les véhicules carrossés, avec des contraintes de temps, de coût.

En pratique, les entreprises constructeurs de véhicules funéraires les transforment en carrosserie et les aménagent extérieurement et intérieurement, et dans ce dernier cas, pour le positionnement du logement cerceuil, ou caisson réfrigéré et autres. La spécificité de ces véhicules fait qu'ils sont réalisés unitairement et parfois en répétitif.

L'examen de cette situation nouvelle entraîne une reconsidération totale des véhicules funéraires dans leur conception et agencement.

La démarche du Demandeur a donc été de réfléchir à la mise en application pratique des directives européennes précitées, de se préparer et de proposer à ses clients une gamme de véhicules avec toutes les places homologuées et d'harmoniser sa gamme de production des véhicules précités.

A partir de cet objectif et du but à atteindre, une première approche a été de disposer dans les véhicules funéraires actuels existant des sièges homologués. Cette démarche, très intéressante, nécessite l'obligation d'une homologation particulière des véhicules par suite de leur nouvelle conception et application, afin de passer de la classe M1, vers la classe N, tout en gardant les homologations d'origine des sièges.

La démarche inventive du Demandeur a été d'élargir la recherche la solution à partir du problème posé, et ce, en s'intéressant à la version « combi VP » (véhicule particulier) des bases identiques aux véhicules utilitaires non spécifiquement étudiés et aménagés pour le transport funéraire, lesdits véhicules existants dans le catalogue des constructeurs en répondant aux normes d'homologation, y compris pour les sièges arrières du passager de classe M1.

L'étude effectuée a permis d'identifier et de sélectionner certaines bases constructeurs de véhicules utilitaires aménagés d'une manière particulière et de les transformer sans modification de structure, afin de les rendre applicables et utilisables au transport funéraire.

La démarche du Demandeur a donc été, par une recherche combinatoire des bases constructeurs sélectionnées des véhicules et de l'emplacement de sièges homologués M1, de concevoir un nouvel aménagement de véhicule funéraire apte à répondre au problème posé et aux normes européennes.

Selon une première caractéristique de l'invention, le procédé d'aménagement d'un véhicule utilitaire et funéraire avec des sièges homologués du véhicule, est remarquable en ce qu'il consiste à identifier des bases constructeurs de véhicules « combi » agencés pour recevoir en plus des sièges et/ou banquettes avant correspondant au chauffeur et à son ou ses passagers adjacents, à rechercher les véhicules pouvant inclure une ou deux lignes de sièges arrières pré-ancrés sur le plancher à l'intérieur du véhicule, à modifier par une analyse combinatoire la position desdits sièges avec suppression de certains d'entre eux pour permettre et autoriser la fixation d'un ou de plusieurs sièges homologués dans des positions nouvelles à l'intérieur du véhicule utilitaire et autoriser ensuite l'insertion d'équipement et moyens nécessaires au véhicule funéraire du type logement cerceuil, ou caisson réfrigéré et autres, lesdits sièges arrières étant homologués (M1).

Ces caractéristiques et d'autres encore ressortiront bien de la suite de la description.

Pour fixer l'objet de l'invention illustré d'une manière non limitative aux figures des dessins où :
- La figure 1 est une vue d'un véhicule utilitaire de type COMBI dans sa version constructeur dénommé « VITO COMBI » de la société DAIMLER-CHRYSLER.
- La figure 1A est une vue à caractère schématique illustrant le positionnement des sièges secondaires et leur conception.
- La figure 2 est une vue en plan du même véhicule dans sa transformation funéraire avec un repositionnement des sièges homologués sur des ancrages d'origine et dans une première version.
- La figure 3 est une vue similaire à la figure 2, dans une seconde version.
- La figure 4 est une vue d'aménagement d'un autre véhicule utilitaire dans sa version constructeur.
- La figure 5 est une vue similaire à la figure 4, dans la transformation funéraire dudit véhicule.
- La figure 6 est une vue d'un véhicule utilitaire version constructeur.
- La figure 7 est une vue selon la figure 6 dudit véhicule dans sa transformation funéraire.
- Les figures 8 et 9 sont des vues d'aménagement d'un autre véhicule utilisé dans une troisième version avec l'incorporation d'un ou de deux sièges complémentaires.

Afin de rendre plus concret l'objet de l'invention, on le décrit maintenant d'une manière non limitative illustrée aux figures des dessins.

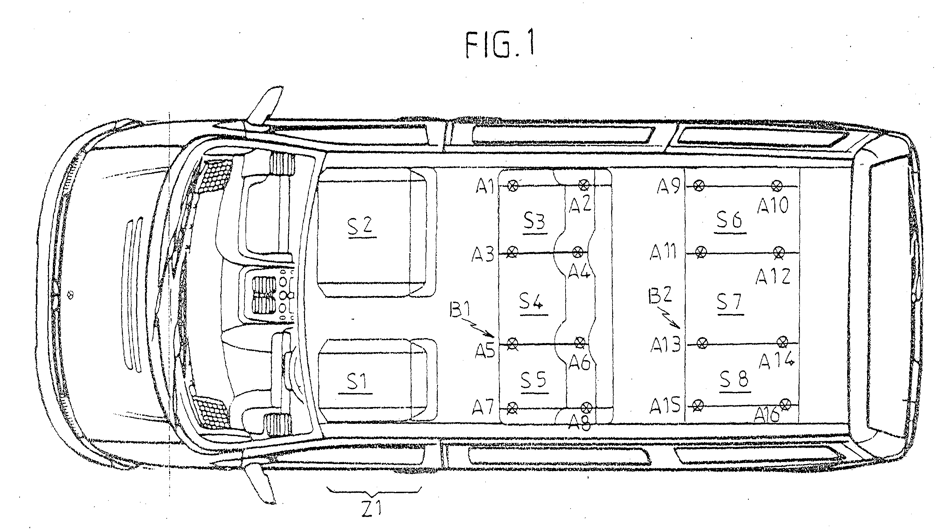

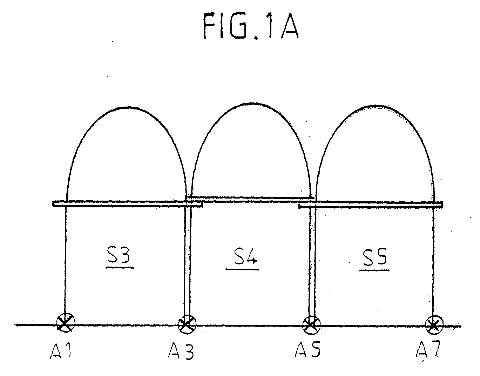

Selon l'invention, le Demandeur a ainsi sélectionné un véhicule utilitaire connu sous la dénomination « VITO COMBI » de la société constructeur DAIMLER-CHRYSLER. On a représenté à la figure 1 par la vue en plan le véhicule utilitaire dans sa configuration courante avec trois zones d'emplacement de personnes, la zone (Z1) correspondant au siège du conducteur (S1) et d'un siège double (S2) adjacente pour le passager avant avec deux places. Derrière, le véhicule comprend une banquette référencée dans son ensemble par (B1) avec trois zones d'assises (S3, S4, S5). Cette banquette est représentée figure 1A et comprend en fait selon le constructeur deux sièges latéraux (S3, S5) avec dosseret dont la structure de pied est fixée à des points d'ancrage (A1, A2, A3, A4) et (A5, A6, A7, A8). Le siège intercalaire (S4) disposé entre les sièges (S3, S5) se trouve en appui sur les côtés latéraux des sièges situés de part et d'autre (S3, S5), en étant démontables. Une seconde banquette (B2) conçue de la même manière est disposée en arrière de la banquette (B1) avec à son tour les sièges (S6, S7, S 8) et des zones d'ancrage (A9, A 10, A11, A12, A 13, A 14, A 15, A16). Tous les sièges précités sont homologués et sont d'origine avec le véhicule.

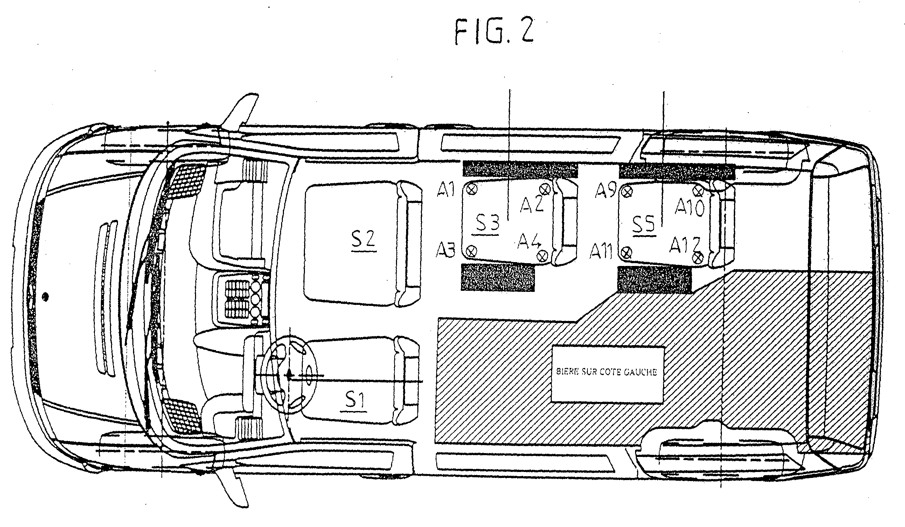

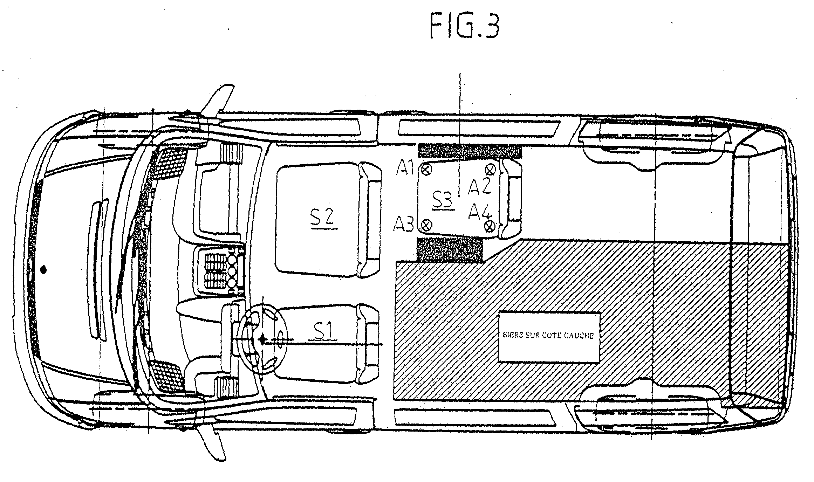

Selon l'invention, l'analyse combinatoire des différents sièges et leur position en situation de véhicule funéraire, amène le Demandeur a retirer la banquette (B2) et à démembrer la banquette (B1). Pour cette dernière, on procède à l'enlèvement du siège (S4) et du siège (S5) pour ne conserver que le siège (S3) qui reste en position figure 3. Le siège (S5) peut être déplacé et positionné à l'emplacement du siège (S6) figure 2 ou du siège (S8) en étant derrière le siège (S3). Les sièges étant homologués et la carrosserie du véhicule n'étant pas modifiée, il n'y a pas besoin d'une homologation spécifique pour les places arrières, celles-ci étant déjà homologuées. Il suffit alors dans l'espace restant d'aménager le véhicule en intégrant le logement-cerceuil ou le caisson réfrigéré selon un profil de découpe approprié tenant compte de l'emplacement des sièges (S3) et (S5). A partir du moment où le véhicule d'origine est équipé avec les différents points d'ancrage de banquettes (B1, B2), il suffit alors de commander le véhicule avec une seule banquette (B1) par exemple, et de le décomposer selon le procédé décrit. Il reste pour le constructeur du véhicule funéraire la partie inutilisée du siège intermédiaire (S4).

Selon cette solution, l'optimisation trouvée permet de répondre d'une part aux critères d'homologation en terme de sécurité des passagers.

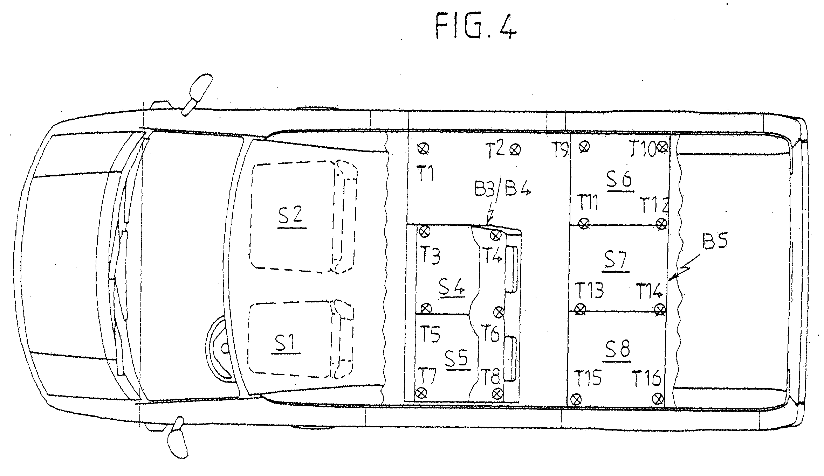

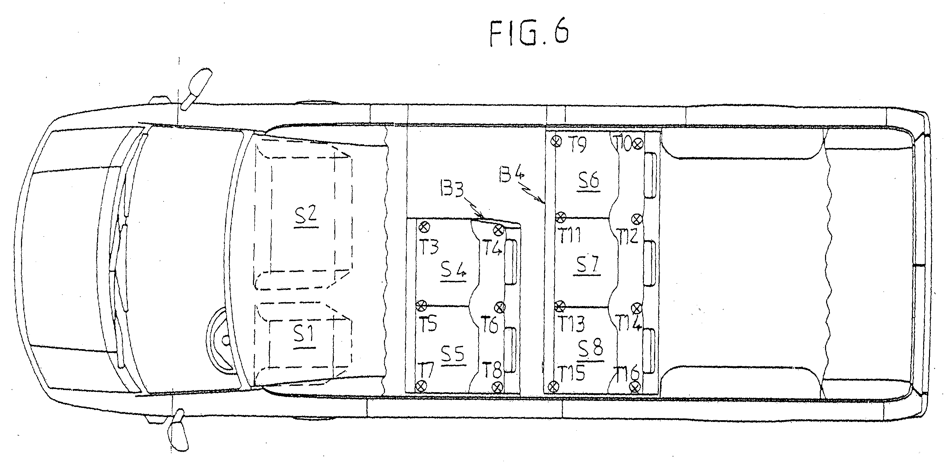

Dans la version des figures 4 à 7, le choix du véhicule utilitaire sélectionné est celui connu sous la référence « SPRINTER / LT COMBI » des constructeurs DAIMLER-CHRYSLER et VAG où les points d'ancrage des banquettes sont préétablis.

Selon le constructeur, derrière le siège du conducteur (S1) et des passagers avant (S2) est disposée une banquette (B3) double places ou (B4) triple places, s'ajustant sur les points d'ancrage (T1, T2, T3, T4, T5, T6, T7, T8), la banquette (B3) étant fixée en (T3) à (T8), la banquette (B4) en (T1) à (T8). Derrière est prévue une banquette (B5) triple places avec les points d'ancrage correspondant (T9) à (T16).

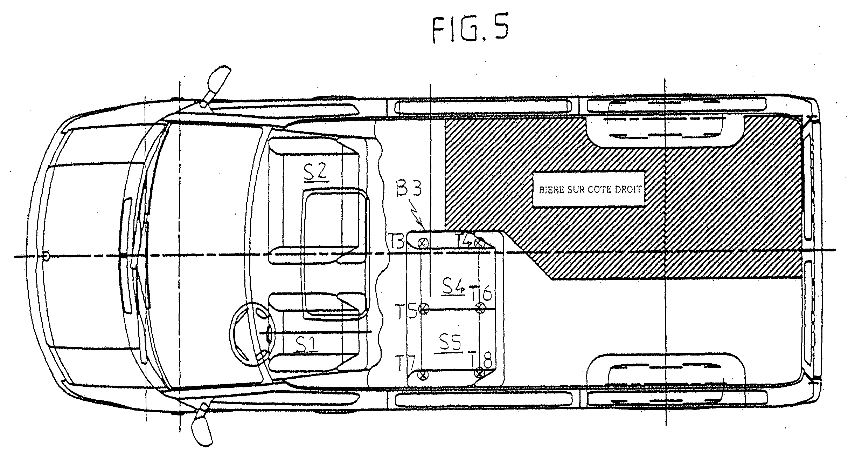

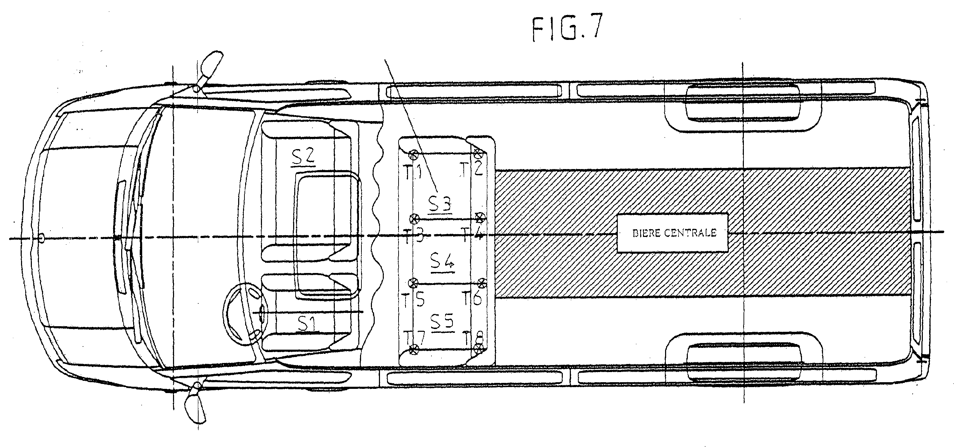

Selon l'invention, le constructeur du véhicule funéraire peut alors ne conserver que la banquette (B3) double places (figure 5) et aménager le véhicule funéraire de manière complémentaire avec le logement-cerceuil ou le caisson réfrigéré et autre composant, ou alors comme représenté figure 7, disposer la banquette (B4) triple places à l'avant, en lieu et place de la banquette (B2) ou (B3), glissée derrière le siège conducteur, en utilisant les moyens d'ancrage existant et en disposant le logement-cerceuil ou caisson et autre composant dans l'espace restant du véhicule.

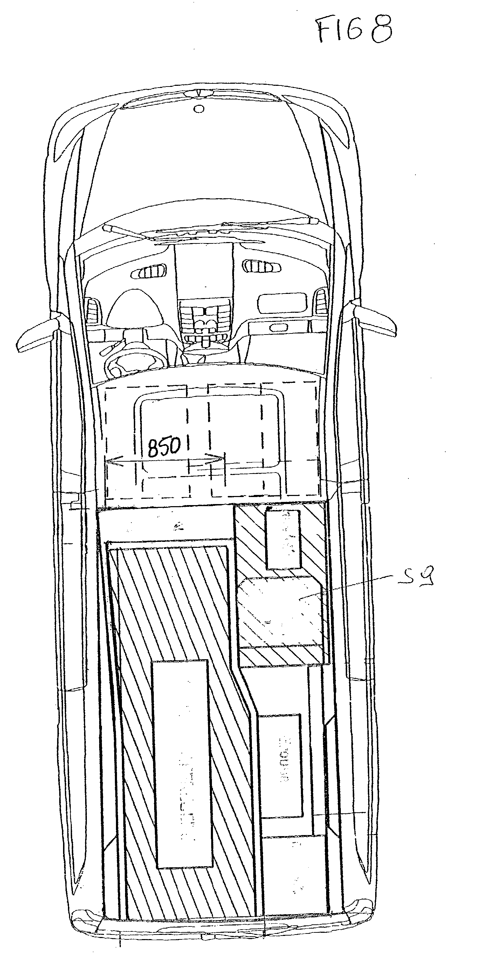

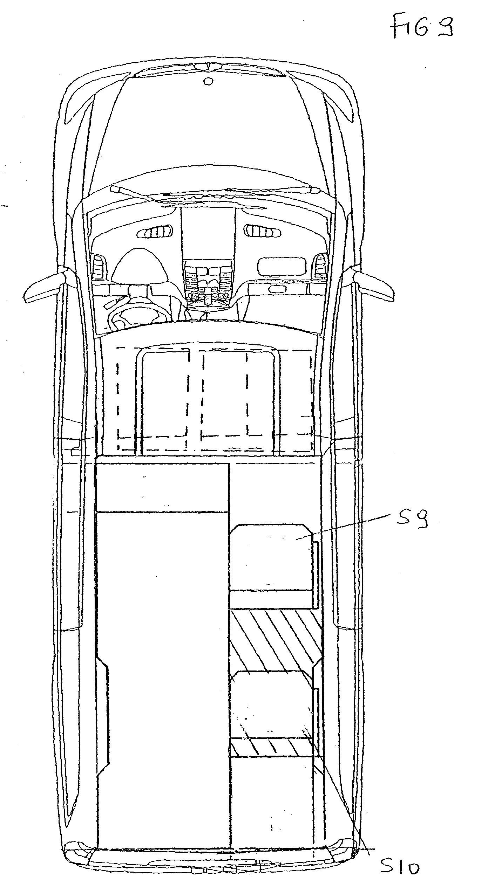

On a représenté figures 8 et 9, une autre version d'aménagement d'un véhicule de type MERCEDES identifié dans la référence constructeur VITO NCV2. Derrière le siège (S1) du conducteur et du siège (S2) adjacent du ou des passagers à ses côtés, on procède à l'implantation à partir d'ancrages existants dans le véhicule et à la mise en place de un ou de deux sièges (S9) (S10) homologués en lieu et place de la ou des banquettes deux ou trois places initialement installées. Les ancrages sont du type à rails sur lesquels les sièges homologués sont susceptibles d'être fixés. On aménage ensuite le véhicule funéraire de la manière appropriée avec les autres composants.

Ainsi, selon l'invention, l'originalité a été de rechercher une solution particulière à partir des véhicules « combi » existant, démarche jamais engagée antérieurement à la connaissance du Demandeur pour adapter le positionnement des sièges homologués à l'espace intérieur en profitant des zones d'ancrage préétablies. On procède ensuite à la transformation du véhicule en véhicule funéraire. Cette démarche permet d'optimiser et de rationaliser la construction du véhicule funéraire en répondant aux exigences d'homologation.

## Revendications

1. Procédé d'aménagement d'un véhicule utilitaire et funéraire, **caractérisé en ce qu'**il comprend des sièges homologués, et **en ce qu'**il consiste à identifier des véhicules « combi » agencés pour recevoir en plus des sièges et/ou banquettes avant correspondant au chauffeur et à son ou ses passagers adjacents, à rechercher les véhicules pouvant inclure une ou deux lignes de sièges arrières pré-ancrés sur le plancher à l'intérieur du véhicule, à modifier par une analyse combinatoire la position desdits sièges avec suppression de certains d'entre eux pour permettre et autoriser la fixation d'un ou de plusieurs sièges homologués dans des positions nouvelles à l'intérieur du véhicule utilitaire et autoriser ensuite l'insertion d'équipement et moyens nécessaires au véhicule funéraire du type logement-cerceuil, ou caisson réfrigérés et autres, lesdits sièges arrières étant homologués M1.

2. Procédé, selon la revendication 1, **caractérisé en ce que** le véhicule utilitaire sélectionné est identifié sous la référence VITO-COMBI avec une configuration courante en trois zones d'emplacement de personnes, une zone correspondant au siège du conducteur (S1) et d'un siège double (S2) adjacent et deux banquettes arrières successives (B1 - B2) avec les zones d'assises (S3 - S4 - S5 - S6 - S7 - S8), avec des points d'ancrage (A1 à A8) pour la première banquette et (A9 à A 16) pour la seconde banquette, et **en ce que** l'analyse combinatoire des différents sièges permet de retirer la seconde banquette (B2), à démembrer la banquette (B1) en enlevant le siège intercalaire (S4) et en disposant le siège (S3) sur la zone d'ancrage initiale ou celle initiale du siège S5,
et **en ce que** le siège S5 est déplacé pour se positionner et s'ancrer à l'endroit du siège (S6) ou du siège (S8) derrière le siège (S3),
et **en ce que** l'espace restant du véhicule est aménagé pour intégré le logement cercueil ou le caisson réfrigéré.

3. Procédé, selon la revendication 1, caractérisé en que le véhicule utilitaire sélectionné est identifié sous la référence SPRINTER / LT COMBI avec une configuration courante derrière le siège du conducteur (S1) et des passagers avant (S2), avec une banquette arrière (B3) double places, ou (B4) triple places, s'ajustant sur des points d'ancrage établis (T1 à T8), et une seconde banquette arrière (B5) triple places avec les points d'ancrage (T9 à T16),
et en ce que l'analyse combinatoire des différents sièges permet de conserver la banquette (B3) double places, ou la banquette (B4) triple places, en aménageant le véhicule funéraire avec le logement cercueil sur le caisson réfrigéré et autre composant.

4. Procédé selon la revendication 1 **caractérisé en ce que** le véhicule utilitaire sélectionné est identifié sous la référence MERCEDES VITO NCV1 avec une configuration courante derrière le siège du conducteur (S1) et du siège (S2) du ou des passagers avants, avec une ou des banquettes arrières s'ajustant sur des points d'ancrage établis, et **en ce que** l'analyse combinatoire permet de supprimer la ou les banquettes arrières en disposant sur le ou les ancrages existants un ou des fauteuils homologués (S9) (S10), les ancrages étant établis sous forme de rails, et en aménageant le véhicule funéraire de ses autres composants.

5. Véhicules funéraires obtenus selon le procédé de l'une quelconque des revendications 1 à 4.
